# EUROPÄISCHE PATENTSCHRIFT

(11) **EP 2 454 794 B1**
(45) Veröffentlichungstag und Bekanntmachung des Hinweises auf die Patenterteilung: **19.06.2013**
(21) Anmeldenummer: 10732911.2
(22) Anmeldetag: 06.07.2010
(51) Int. Cl.: H02J 3/36, H02M 7/00, H02M 1/14, H02M 7/49

(54) **VORRICHTUNG ZUM UMRICHTEN EINER ELEKTRISCHEN GRÖSSE UMFASSEND EINEN STERNPUNKTREAKTOR**
APPARATUS FOR CONVERSION OF AN ELECTRIC QUANTITY COMPRISING A NEUTRAL POINT REACTOR
DISPOSITIF DE CONVERSION D'UNE GRANDEUR ÉLECTRIQUE COMPRENANT UN RÉACTEUR DE POINT NEUTRE

(30) Priorität: 17.07.2009 DE 102009034354
(43) Veröffentlichungstag der Anmeldung: 23.05.2012
(73) Patentinhaber: Siemens Aktiengesellschaft, 80333 München (DE)
(72) Erfinder: ARMSCHAT, Christoph, 91058 Erlangen (DE); DOMMASCHK, Mike, 91096 Möhrendorf (DE); HUSSENNETHER, Volker, 90482 Nürnberg (DE); WESTERWELLER, Thomas, 91091 Grossenseebach (DE)
(86) Internationale Anmeldenummer: PCT/EP2010/059632
(87) Internationale Veröffentlichungsnummer: WO 2011/006796

(56) Entgegenhaltungen:
- WO-A1-02/063758
- WO-A1-2005/067118
- WO-A1-2008/024038
- WO-A1-2008/036009

## Beschreibung

Die Erfindung betrifft eine Vorrichtung zum Umrichten einer elektrischen Größe im Bereich der Elektroenergieübertragung und -verteilung mit einem zwischen einem Wechselspannungsnetz und einem Gleichspannungskreis schaltbaren Umrichter, der Leistungshalbleiterventile aufweist, die sich zwischen einem Wechselspannungsanschluss und einem Gleichspannungsanschluss erstrecken, wobei jedes Leistungshalbleiterventil eine Reihenschaltung aus bipolaren Submodulen umfasst, die jeweils einen Energiespeicher sowie eine Leistungshalbleiterschaltung aufweisen, und einer mit dem Wechselspannungsanschluss verbundenen Netzanschlusseinheit zum Verbinden mit dem Wechselspannungsnetz.

Eine solche Vorrichtung ist aus der WO 02/063758 A1 bereits bekannt. Dort ist ein spannungseinprägender Umrichter offenbart, dessen Phasenmodule Reihenschaltungen aus zweipoligen Submodulen aufweisen. Der Umrichter kann somit als modularer Mehrstufenumrichter bezeichnet werden. Die Submodule verfügen jeweils über einen Speicherkondensator und über Leistungshalbleiterschalter, die als Vollbrückenschaltung miteinander verschaltet sind.

In der WO 2008/036009 A1 ist ebenfalls eine Vorrichtung zum Umrichten einer elektrischen Größe als Teil einer Hochspannungsgleichstromübertragungsanlage offenbart. Die Vorrichtung ist über Transformatoren mit dem Wechselspannungsnetz verbunden, deren Sekundärwicklung zu einem geerdeten Sternpunkt verschaltete Drosselspulen aufweist.

Weitere Umrichter sind aus der WO 2008/024038 A1 und aus der WO 2005/067118 A1 bekannt.

Eine Hochspannungsgleichstromübertragungsanlage (HGÜ-Anlage) weist in der Regel zwei über einen Gleichspannungszwischenkreis miteinander verbundene Umrichter auf, die wechselspannungsseitig mit jeweils einem Wechselspannungsnetz gekoppelt sind. Mit Hilfe der Hochspannungsgleichstromübertragungsanlage ist es möglich, elektrische Leistung von dem einen Wechselspannungsnetz zu dem anderen Wechselspannungsnetz zu übertragen. Insbesondere die Energieübertragung über weite Strecken ist mit der Hochspannungsgleichstromübertrag vorteilhaft, da im Vergleich zur Übertragung mit Wechselspannung geringere Verluste bei der Übertragung auftreten.

Aus dem Stand der Technik sind unterschiedliche Umrichtertopologien für die HGÜ bekannt. Zwei-Stufen-Umrichter, die in Fachkreisen als Zweipunkt-Umrichter bezeichnet werden, erzeugen an ihrem Ausgang lediglich zwei unterschiedliche Spannungsniveaus. Die Umrichterventile der Zweipunkt-Umrichter weisen eine Vielzahl von Leistungshalbleiterschaltern auf, die in Reihe zueinander angeordnet sind. Die in Reihe geschalteten Leistungshalbleiter müssen alle gleichzeitig geschaltet, also von einer Unterbrecherstellung, in der ein Stromfluss über den Leistungshalbleiter unterbrochen ist, in eine Durchlassstellung, in welcher ein Stromfluss über den Leistungshalbleiter ermöglicht ist, überführt werden. Selbstgeführte und spannungseinprägende Umrichtern werden auch als "Voltage Source Converter (VSC)" bezeichnet. Drei Spannungsstufen aufweisende Umrichter, werden als Dreipunkt-Umrichter bezeichnet.

Neben Zwei- und Dreipunkt-Umrichtern sind aus dem Stand der Technik auch so genannte mehrstufige Umrichter bekannt, die in Fachkreisen auch als "Multilevel Voltage Source Converter (VSC)" bezeichnet sind. Multilevel VSCs weisen in der Regel Leistungshalbleiterventile aus bipolaren Submodulen auf, die jeweils einen Energiespeicher, wie beispielsweise einen Kondensator und eine Leistungshalbleiterschaltung aufweisen, mit deren Hilfe es möglich ist, die an dem Kondensator abfallende Spannung oder aber eine Nullspannung an den Ausgangsklemmen eines jeden Submoduls zu erzeugen. Durch die Reihenschaltung der Submodule kann die Spannung an dem Ausgang eines jeden Leistungshalbleiterventils stufenweise verändert werden, wobei die Höhe der Stufen durch die an dem jeweiligen Kondensator abfallende Spannung bestimmt ist. Der bei Zwei- oder Dreipunkt-Umrichtern vorgesehene zentrale Kondensator des Gleichspannungskreises ist bei Multilevel-VSCs auf die einzelnen Submodule der Leistungshalbleiterventile verteilt. Multilevel-Umrichter weisen den Nachteil auf, dass die Pole des Gleichspannungszwischenkreises, an welche die Leistungshalbleiterventile der Umrichter angeschlossen sind, bezüglich des Erdpotenzials Spannungen mit unterschiedlich hohen Beträgen aufweisen können.

Aufgabe der Erfindung ist es daher, einen Umrichter der eingangs genannten Art bereitzustellen, mit dem eine einfache, wirksame und kostengünstige Symmetrierung der Spannungen im Gleichspannungskreis gegenüber dem Erdpotenzial herbeigeführt wird.

Die Erfindung löst diese Aufgabe durch einen mit einem Potentialpunkt zwischen der Netzanschlusseinheit und dem Umrichter verbundenen Sternpunktreaktor, der zu einem geerdeten Sternpunkt verschaltete Drosselspulen aufweist, wobei die Drosselspulen so ausgestaltet sind, dass diese für Wechselstrom mit der Grundschwingungsfrequenz des Wechselspannungsnetzes einen Strompfad mit hoher Impedanz zum Erdpotenzial und für einen Gleichstrom einen Strompfad mit niedriger Impedanz zum Erdpotenzial darstellen.

Erfindungsgemäß ist die umrichterseitige Potenzialanbindung durch einen Sternpunktreaktor realisiert. Der Sternpunktreaktor weist zu einem Sternpunkt verschaltete Drosselspulen auf, die an ihrer vom Sternpunkt abgewandten Seite mit einem Wechselspannungsanschluss des jeweiligen Umrichters galvanisch verbunden sind. Bei Anschluss der erfindungsgemäßen Vorrichtung an ein Wechselspannungsnetz mit Hilfe der Netzanschlusseinheit ist der Sternpunktreaktor mit anderen Worten parallel zum Wechselspannungsnetz angeordnet. Die Drosselspulen des Sternpunktreaktors sind so ausgestaltet, dass diese für die Grundschwingungskomponente des Wechselstromes, die üblicherweise bei 50 oder 60 Hz liegt, einen Strompfad mit hoher Impedanz darstellen, so dass die Wechselströme nicht über den geerdeten Sternpunkt abfließen können. Der Stromfluss von Gleichströmen ist jedoch in der Größenordnung von parasitären Kriechströmen auf Isolatoroberflächen möglich. Zweckmäßigerweise ist der Sternpunktreaktor im Freiluftfeld in der Nähe einer Ventilhalle, in welcher die Leistungshalbleiterventile angeordnet sind, lokalisiert. Mit Hilfe dieses Sternpunktreaktors ist es somit möglich, den Gleichspannungszwischenkreis von Multilevel-Umrichtern, die ein fliegendes Potenzial aufweisen, zu symmetrieren. Mit anderen Worten weisen die Pole des Gleichspannungszwischenkreises gegenüber dem Erdpotenzial Spannungen auf, deren Beträge in etwa gleich sind.

Zweckmäßigerweise ist der Sternpunkt des Sternpunktreaktors über einen Ohmschen Widerstand mit dem Erdpotenzial verbunden. Mit Hilfe des Ohmschen Widerstandes können Resonanzen oder Schwingungen zwischen der Leiter-Erde-Kapazität des Gleichspannungs-Zwischenkreises und der Induktivität des Sternpunktreaktors vermieden werden. Auf diese Weise ist somit eine Dämpfung bereitgestellt.

Zweckmäßigerweise weist jede Drosselspule einen magnetisierbaren Kern auf. Der magnetisierbare Kern kann beispielsweise ein Eisenkern oder dergleichen sein. Gemäß einer diesbezüglich zweckmäßigen Weiterentwicklung begrenzt der Kern einen Luftspalt. Der Luftspalt dient dazu, eine frühzeitige Sättigung des Kerns beim Führen von Gleichströmen beispielsweise bis zu 100 mA zu vermeiden.

Zweckmäßigerweise weist jedes Submodul eine Vollbrückenschaltung mit vier abschaltbaren Leistungshalbleitern auf, die so mit dem Energiespeicher verschaltet sind, dass an den Ausgangsklemmen des Submoduls eine an dem Energiespeicher abfallende Energiespeicherspannung, eine Nullspannung oder aber die inverse Energiespeicherspannung erzeugbar ist. Solche Vollbrückenschaltungen sind dem Fachmann auf diesem Gebiet bestens bekannt, so dass hier auf deren genaue Wirkungsweise und Schaltmuster nicht genauer eingegangen zu werden braucht. Vollbrückenschaltungen werden auch als H-Brückenschaltungen bezeichnet. Jedem abschaltbaren Leistungshalbleiter ist eine Freilaufdiode gegensinnig parallel geschaltet.

Abweichend hiervon weist jedes Submodul eine Halbbrückenschaltung mit zwei abschaltbaren Leistungshalbleitern auf, die so mit dem Energiespeicher verschaltet sind, dass an Ausgangsklemmen des Submoduls eine an dem Energiespeicher abfallende Energiespeicherspannung oder eine Nullspannung erzeugbar ist. Umrichter mit einer solchen Topologie und der Submodule werden auch als so genannte "Marquardt-Umrichter" bezeichnet. Im Gegensatz zur Vollbrückenschaltung ist mit der Halbbrückenschaltung keine inverse Energiespeicherspannung an den Ausgangsklemmen erzeugbar. Dafür ist bei der Halbbrückenschaltung die Anzahl der kostenintensiven Leistungshalbleiter für den Umrichter auf die Hälfte reduziert. Auch hier ist jedem ansteuerbaren und abschaltbaren Leistungshalbleiter, wie IGBT oder GTO, wieder eine Freilaufdiode gegensinnig parallel geschaltet.

Vorteilhafterweise ist die Netzanschlusseinheit ein Transformator. Der Transformator ist den jeweiligen Anforderungen entsprechend verschaltet. Die Primärwicklung des Transformators ist beispielsweise über eine Schaltanlage mit dem Wechselspannungsnetz verbunden. Die Sekundärwicklung des Transformators ist galvanisch mit dem Wechselspannungsanschluss des Umrichters sowie mit dem Sternpunktreaktor verbunden. Für jede Phase, die sich von der Netzanschlusseinheit zum Wechselspannungsanschluss des Umrichters hin erstreckt, ist eine Drosselspule vorgesehen. Die Anzahl der Drosselspulen entspricht im Rahmen der Erfindung somit der Anzahl der Phasen des anschließbaren Wechselspannungsnetzes.

Bei einer weiteren Variante umfasst die Netzanschlusseinheit eine in Reihe mit dem Wechselspannungsnetz verbindbare Induktivität. Der Strompfad vom Wechselspannungsnetz zum Wechselspannungsanschluss des Umrichters führt gemäß dieser Weiterentwicklung über die in Reihe geschaltete Induktivität. Die Netzanschlusseinheit kann darüber hinaus einen Kondensator, der in Reihe zur Induktivität geschaltet ist, aufweisen. Darüber hinaus ist es möglich, dass die Netzanschlusseinheit sowohl einen Transformator als auch eine in Reihe geschaltete Induktivität als auch einen in Reihe geschalteten Kondensator aufweist. Die Induktivität ist grundsätzlich ein beliebiges induktives Bauteil. Zweckmäßigerweise ist die Induktivität eine Spule, Drossel, Wicklung oder dergleichen.

Zweckmäßigerweise sind die Drosselspulen des Sternpunktreaktors auf Isolatoren montiert. Insbesondere ist es zweckmäßig, dass der Sternpunktreaktor mit seinen Drosselspulen im Freien aufgestellt ist.

Vorteilhafterweise weist der Umrichter einen nicht geerdeten Umrichtersternpunkt auf, wobei die Drosselspulen am Umrichtersternpunkt angeordnet sind.

Weitere zweckmäßige Ausgestaltungen und Vorteile der Erfindung sind Gegenstand der nachfolgenden Beschreibung von Ausführungsbeispielen unter Bezug auf die Figur der Zeichnung, wobei die
- Figur: ein Ausführungsbeispiel eines Sternpunktreaktors einer erfindungsgemäßen Vorrichtung zeigt.

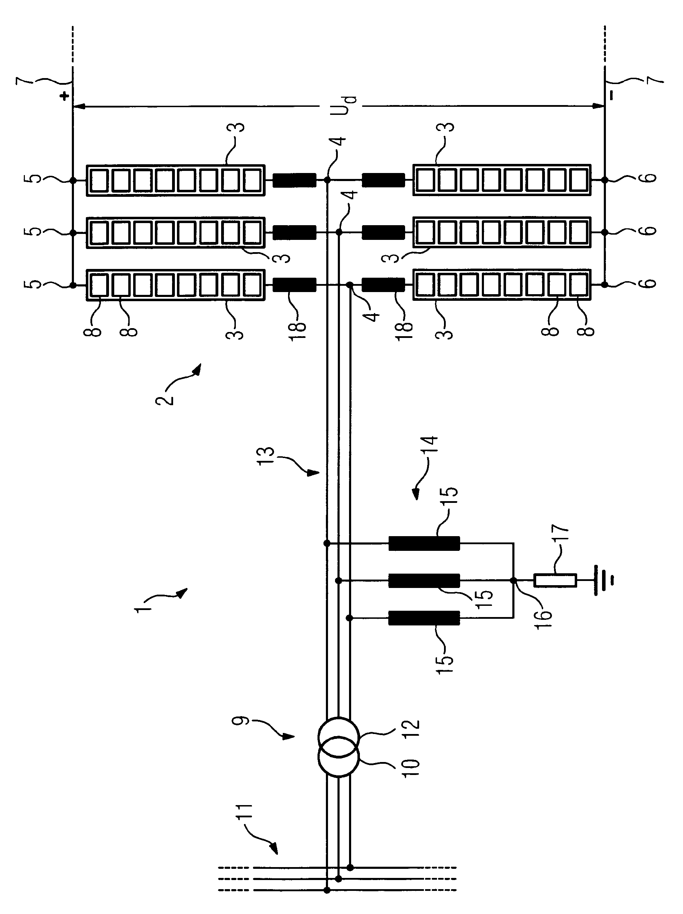

Figur 1 zeigt ein Ausführungsbeispiel der erfindungsgemäßen Vorrichtung 1, die einen Umrichter 2 mit sechs Leistungshalbleiterventilen 3 aufweist, die sich jeweils zwischen einem Wechselspannungsanschluss 4 und einem Gleichspannungsanschluss 5 beziehungsweise 6 erstrecken. Dabei ist zwischen jedem Leistungshalbleiterventil 3 und jedem Wechselspannungsanschluss 4 eine Induktivität 18 in Form einer Spule vorgesehen, mit der insbesondere die Regelung von Kreisströmen, die zwischen verschiedenen Leistungshalbleiterventilen 3 fließen können, erleichtert wird. Jeder Gleichspannungsanschluss 5 ist mit dem positiven Pol eines Gleichspannungszwischenkreises 7 verbunden, der in der Figur nur teilweise dargestellt ist. Die Gleichspannungsanschlüsse 6 sind mit dem negativen Pol (-) des Gleichspannungszwischenkreises 7 verbunden. Jedes Leistungshalbleiterventil 3 ist aus einer Reihenschaltung von bipolaren Submodulen 4 zusammengesetzt, die jeweils einen figürlich nicht dargestellten Kondensator sowie eine Leistungshalbleiterschaltung aus zwei abschaltbaren Leistungshalbleitern, IGBTs, aufweisen, denen jeweils eine Freilaufdiode gegensinnig parallel geschaltet ist. Die Submodule 8 sind bipolar und weisen daher zwei Ausgangsklemmen auf. Die Verschaltung der Leistungshalbleiter und des Kondensators ist derart gewählt, dass an den Ausgangsklemmen jedes Submoduls entweder die an dem Kondensator abfallende Kondensatorspannung oder aber eine Nullspannung erzeugbar ist. Durch zweckmäßige Ansteuerung der Submodule 8 ist es somit möglich, die an den Leistungshalbleiterventilen 3 abfallende Spannung stufenweise einzustellen. Die Anzahl der Submodule liegt bei Anwendungen im Bereich der Hochspannungsgleichstromübertragung zwischen 20 und mehreren hundert.

Die Vorrichtung 1 weist ferner einen Transformator 9 als Netzanschlusseinheit auf, wobei der Transformator 9 eine Primärwicklung 10, die mit einem Wechselspannungsnetz 11 verbunden ist, sowie eine Sekundärwicklung 11 aufweist, die galvanisch mit den Wechselspannungsanschlüssen 4 des Umrichters 1 verbunden ist. Das Wechselspannungsnetz 11 ist dreiphasig ausgestaltet. Dies gilt entsprechend für die Anzahl der Wechselspannungsanschlüsse 4 sowie für einen Leiterabschnitt 13 zur galvanischen Verbindung der Sekundärwicklung 12 mit den Wechselspannungsanschlüssen 4. Der Leiterabschnitt 13 kann auch als Potenzialpunkt zwischen der Netzanschlusseinheit 9 und den Wechselspannungsanschlüssen 4 des Umrichters 2 bezeichnet werden.

Zur Symmetrierung der positiven Gleichspannung und der negativen Gleichspannung, also mit anderen Worten zur Symmetrierung der Pole des Gleichspannungszwischenkreises 7 gegenüber dem Erdpotenzial, ist ein Sternpunktreaktor 14 vorgesehen. Der Sternpunktreaktor 14 verfügt über drei Drosselspulen 15, die zu einem Sternpunkt 16 verschaltet sind. Der Sternpunkt 16 ist über einen Ohmschen Widerstand 17 mit dem Erdpotenzial verbunden. Jede Drosselspule 15 ist an ihrer vom Sternpunkt 16 abgewandten Seite mit einer Phase des Leiterabschnittes 13 und somit galvanisch mit einem Wechselspannungsanschluss 4 des Umrichters 2 verbunden.

Die Drosselspulen 15 sind so ausgelegt, dass diese für die Grundfrequenz der Wechselspannung des Wechselspannungsnetzes 11, die in dem gewählten Ausführungsbeispiel 50 Hz beträgt, einen Strompfad mit hoher Impedanz darstellen. Hierzu verfügt jede Drosselspule 15 über einen Eisenkern. Zur Vermeidung einer vorzeitigen Sättigung des Eisenkerns ist innerhalb jedes Eisenkerns der Drosselspulen 15 ein Luftspalt vorgesehen. Der Sternpunktreaktor ist wie ein marktüblicher Entladewandler aufgebaut, wobei die Sekundärwicklungen des Entladewandlers weggelassen wurden. Die Drosselspulen 15 des Sternpunktreaktors sind auf zweckmäßigen Isolatoren, beispielsweise solche Isolatoren, die für 39 kV ausgelegt sind, aufgestellt. Mit Hilfe des Sternpunktreaktors 14 ist somit eine wechselspannungsseitige Potenzialanbindung des Umrichters 2 ermöglicht, mit einer Symmetrierung der Pole des Gleichspannungszwischenkreises 7 im Gefolge. Erste Tests haben ergeben, dass trotz extremer Anregung des Sternpunktreaktors mit der dritten Harmonischen der Grundschwingung der Wechselspannung das System stabil bleibt. Kreisströme sind weitestgehend vermieden. Darüber hinaus treten im Gegensatz zur gleichspannungsseitigen Potenzialanbindung deutlich reduzierte Energieverluste auf. Der von seinem Aufbau her einem induktiven Spannungswandler ähnliche Sternpunktreaktor ist als Standardprodukt am Markt erhältlich, so dass die erfindungsgemäße Vorrichtung kostengünstig ist.

## Patentansprüche

1. Vorrichtung (1) zum Umrichten einer elektrischen Größe im Bereich der Energieübertragung und -verteilung mit
- einem zwischen einem Wechselspannungsnetz (11) und einem Gleichspannungskreis (7) schaltbaren Umrichter (2), der Leistungshalbleiterventile (3) aufweist, die sich zwischen einem Wechselspannungsanschluss (4) und einem Gleichspannungsanschluss (5,6) erstrecken, wobei jedes Leistungshalbleiterventil (3) eine Reihenschaltung aus bipolaren Submodulen (8) umfasst, die jeweils einen Energiespeicher sowie eine Leistungshalbleiterschaltung aufweisen, und
- einer mit dem Wechselspannungsanschluss (4) verbundenen Netzanschlusseinheit (9) zum Verbinden mit dem Wechselspannungsnetz (11),
**gekennzeichnet durch**
einen mit einem Potentialpunkt (13) zwischen der Netzanschlusseinheit (9) und dem Umrichter (2) verbundenen Sternpunktreaktor (14), der zu einem geerdeten Sternpunkt (16) verschaltete Drosselspulen (15) aufweist, wobei die Drosselspulen (15) so ausgestaltet sind, dass diese für Wechselstrom mit der Grundschwingungsfrequenz des Wechselspannungsnetzes (11) einen Strompfad mit hoher Impedanz zum Erdpotenzial und für einen Gleichstrom einen Strompfad mit niedriger Impedanz zum Erdpotenzial darstellen.

2. Vorrichtung (1) nach Anspruch 1,
**dadurch gekennzeichnet , dass**
jede Drosselspulen (15) mit ihrer vom Sternpunkt (16) abgewandten Seite mit einem zugeordneten Wechselspannungsanschluss (4) des Umrichters (2) verbunden ist.

3. Vorrichtung (1) nach Anspruch 1 oder 2,
**dadurch gekennzeichnet, dass**
der Sternpunkt (16) des Sternpunktreaktors (14) über einen Ohmschen Widerstand (17) mit dem Erdpotenzial verbunden ist.

4. Vorrichtung (1) nach einem der vorhergehenden Ansprüche,
**dadurch gekennzeichnet, dass**
jede Drosselspule (15) einen magnetisierbaren Kern aufweist.

5. Vorrichtung (1) nach Anspruch 4,
**dadurch gekennzeichnet, dass**
der Kern einen Luftspalt begrenzt.

6. Vorrichtung (1) nach einem der vorhergehenden Ansprüche,
**dadurch gekennzeichnet, dass**
jedes Submodul (8) eine Vollbrückenschaltung mit vier abschaltbaren Leistungshalbleitern aufweist, die so mit dem Energiespeicher verschaltet sind, dass an Ausgangsklemmen des Submoduls eine an dem Energiespeicher abfallende Energiespeicherspannung, eine Nullspannung oder aber die inverse Energiespeicherspannung erzeugbar ist.

7. Vorrichtung (1) nach einem der Ansprüche 1 bis 5,
**dadurch gekennzeichnet, dass**
jedes Submodul eine Halbbrückenschaltung mit zwei abschaltbaren Leistungshalbleitern aufweist, die so mit dem Energiespeicher verschaltet sind, dass an Ausgangsklemmen des Submoduls eine an dem Energiespeicher abfallende Energiespeicherspannung oder eine Nullspannung erzeugbar ist.

8. Vorrichtung (1) nach einem der vorhergehenden Ansprüche,
**dadurch gekennzeichnet, dass**
die Netzanschlusseinheit ein Transformator (9) ist.

9. Vorrichtung (1) nach einem der vorhergehenden Ansprüche,
**dadurch gekennzeichnet, dass**
die Netzanschlusseinheit eine in Reihe mit dem Wechselspannungsnetz (11) verbindbare Induktivität aufweist.

10. Vorrichtung (1) nach einem der vorhergehenden Ansprüche,
**dadurch gekennzeichnet, dass**
die Drosselspulen (15) des Sternpunktreaktors (14) auf Isolatoren montiert sind.

11. Vorrichtung (1) nach einem der vorhergehenden Ansprüche,
**dadurch gekennzeichnet, dass**
der Umrichter (2) einen nicht geerdeten Umrichtersternpunkt aufweist und die Drosselspulen (15) am Umrichtersternpunkt angeordnet sind.

## Claims

1. Apparatus (1) for converting an electrical variable in the sector of energy transmission and distribution with
- a converter (2), which can be switched between an AC voltage system (11) and a DC voltage circuit (7) and has power semiconductor valves (3), which extend between an AC voltage connection (4) and a DC voltage connection (5, 6), each power semiconductor valve (3) comprising a series circuit comprising bipolar submodules (8), which each have an energy store and a power semiconductor circuit, and
- a system connection unit (9) for connection to the AC voltage system (11), said system connection unit being connected to the AC voltage connection (4),
**characterized by**
a star-point reactor (14), which is connected to a potential point (13) between the system connection unit (9) and the converter (2) and has inductor coils (15) which are interconnected to form a grounded star point (16), the inductor coils (15) being configured in such a way that they represent a current path with a high impedance to ground potential, for alternating current with the fundamental frequency of the AC voltage system (11), and a current path with a low impedance to ground potential, for a direct current.

2. Apparatus (1) according to Claim 1, **characterized in that** each inductor coil (15) is connected, with its side remote from the star point (16), to an associated AC voltage connection (4) of the converter (2).

3. Apparatus (1) according to Claim 1 or 2, **characterized in that** the star point (16) of the star-point reactor (14) is connected to the ground potential via a nonreactive resistor (17) .

4. Apparatus (1) according to one of the preceding claims, **characterized in that** each inductor coil (15) has a magnetizable core.

5. Apparatus (1) according to Claim 4, **characterized in that** the core delimits an air gap.

6. Apparatus (1) according to one of the preceding claims, **characterized in that** each submodule (8) has a full-bridge circuit with four disconnectable power semiconductors, which are interconnected with the energy store in such a way that an energy store voltage drop across the energy store, a zero voltage or else the inverse energy store voltage can be generated at output terminals of the submodule.

7. Apparatus (1) according to one of Claims 1 to 5, **characterized in that** each submodule has a half-bridge circuit with two disconnectable power semiconductors, which are interconnected with the energy store in such a way that an energy store voltage drop across the energy store or a zero voltage can be generated at output terminals of the submodule.

8. Apparatus (1) according to one of the preceding claims, **characterized in that** the system connection unit is a transformer (9).

9. Apparatus (1) according to one of the preceding claims, **characterized in that** the system connection unit has an inductance, which can be connected in series with AC voltage system (11).

10. Apparatus (1) according to one of the preceding claims, **characterized in that** the inductor coils (15) of the star-point reactor (14) are fitted on insulators.

11. Apparatus (1) according to one of the preceding claims, **characterized in that** the converter (2) has a non-grounded converter star point, and the inductor coils (15) are arranged at the converter star point.

## Revendications

1. Dispositif de transformation d'une grandeur électrique dans le domaine de la transmission et de la distribution d'électricité, comprenant
- un convertisseur ( 2 ) qui peut être monté entre un réseau ( 11 ) de tension alternative et un circuit ( 7 ) de tension continue et qui a des soupapes ( 3 ) à semi-conducteur de puissance, qui s'étendent entre une borne ( 4 ) de tension alternative et une borne ( 5, 6 ) de tension continue, chaque soupape ( 3 ) à semi-conducteur de puissance comprenant un circuit série composé de sous--modules ( 8 ) bipolaires, qui ont respectivement un accumulateur d'énergie ainsi qu'un circuit à semi-conducteur de puissance, et
- une unité ( 9 ) de connexion de réseau, reliée à la borne ( 4 ) de tension alternative pour la liaison au réseau ( 11 ) de tension alternative,
**caractérisé par**
un réacteur ( 14 ) à point neutre, qui est monté par un point ( 13 ) de potentiel entre l'unité ( 9 ) de connexion du réseau et le convertisseur ( 2 ) et qui a des bobines ( 15 ) de self reliées à un point ( 16 ) neutre mis à la terre, les bobines ( 15 ) de self étant conformées de manière à représenter, pour le courant alternatif à la fréquence d'oscillation fondamentale du réseau ( 11 ) de tension alternative, un trajet de courant de grande impédance menant au potentiel de terre et, pour un courant continu, un trajet de courant d'impédance petite menant au potentiel de terre.

2. Dispositif ( 1 ) suivant la revendication 1,
**caractérisé en ce que** chaque bobine ( 15 ) de self est reliée par son côté éloigné du point ( 16 ) neutre à une borne ( 4 ) associée de tension alternative du convertisseur ( 2 ).

3. Dispositif ( 1 ) suivant la revendication 1 ou 2,
**caractérisé en ce que** le point neutre du réacteur ( 14 ) à point neutre est relié au potentiel de terre par une résistance ( 17 ) ohmique.

4. Dispositif ( 1 ) suivant l'une des revendications précédentes,
**caractérisé en ce que** chaque bobine ( 15 ) de self a un noyau magnétisable.

5. Dispositif ( 1 ) suivant la revendication 4,
**caractérisé en ce que** le noyau délimite un entrefer.

6. Dispositif ( 1 ) suivant l'une des revendications précédentes,
**caractérisé en ce que** chaque sous module ( 8 ) a un circuit en pont complet ayant quatre semiconducteurs de puissance pouvant être bloqués, qui sont reliés à l'accumulateur d'énergie de manière à pouvoir produire sur des bornes de sortie du sous-module une tension d'accumulateur d'énergie chutant sur l'accumulateur d'énergie, une tension nulle ou la tension inverse de l'accumulateur d'énergie.

7. Dispositif ( 1 ) suivant l'une des revendications 1 à 5,
caractérisé en que chaque sous module a un circuit en demi pont ayant deux semiconducteurs de puissance pouvant être bloqués, qui sont reliés à l'accumulateur d'énergie de manière à pouvoir produire à une borne de sortie du sous-module, une tension d'accumulateur d'énergie chutant sur l'accumulateur d'énergie ou une tension nulle.

8. Dispositif ( 1 ) suivant l'une des revendications précédentes,
**caractérisé en ce que** l'unité de connexion de réseau est un transformateur ( 9 ).

9. Dispositif ( 1 ) suivant l'une des revendications précédentes,
**caractérisé en ce que** l'unité de connexion de réseau comporte une inductance pouvant être montée en série avec le réseau ( 11 ) de tension alternative.

10. Dispositif ( 1 ) suivant l'une des revendications précédentes,
**caractérisé en ce que** les bobines ( 15 ) de self du réacteur ( 14 ) à point neutre sont montées sur des isolants.

11. Dispositif ( 1 ) suivant l'une des revendications précédentes,
**caractérisé en ce que** le convertisseur ( 2 ) a un point neutre de convertisseur qui n'est pas mis à la terre et les bobines ( 15 ) de self sont montées sur le point neutre du convertisseur.
